# EUROPEAN PATENT APPLICATION

(11) **EP 3 854 691 A1**
(43) Date of publication of application: **28.07.2021**
(21) Application number: 20153740.4
(22) Date of filing: 24.01.2020
(51) Int. Cl.: B64D 15/20

(54) **ICE DETECTION ARRANGEMENT**

(71) Applicant: Goodrich Corporation, Charlotte, NC 28217 (US)
(72) Inventor: DEBBADI, Karthik, Cork, T23 K19X (IE); RIDOUANE, El Hassan, Rochestown, Co. Cork (IE); CHABUKSWAR, Rohan, Cork, T12 D297 (IE); ZADELL, Alex, Willoughby, OH Ohio 44094 (US); SELVARAJ, Sugumaran, 560067 Bengaluru, Karnataka (IN); BOTURA, Galdemir, Copley, OH Ohio 44321 (US); GELAO, Giancarlo, Cork, T23 YY01 (IE)
(74) Representative: Dehns

(57) **Abstract**

An ice detection system for an aircraft surface, comprising a sensor assembly (10) comprising a plurality of temperature sensitive elements configured to be arranged at respective points on the aircraft surface, a control unit (20) arranged to receive signals indicative of a temperature sensed by each of the temperature sensitive elements, a signal conducting bus (50) to transmit the signals from the temperature sensitive elements to the control unit, and means for providing power to the sensor assembly, wherein the sensor assembly further comprises a multiplexer (40) arranged to multiplex the signals from the plurality of temperature sensitive elements into a single signal for transmission on the signal conducting bus to the control unit.

## Description

### TECHNICAL FIELD

The present disclosure is concerned with systems and methods for detecting temperatures on any aircraft surfaces, for example, but not limited to, wings, flaps, slats, rotor blades etc. to detect conditions in which ice has formed or is likely to form.

### BACKGROUND

Ice formation on aircraft surfaces can cause damage to the surfaces and can even have an adverse effect on aircraft operation during flight, which can have catastrophic consequences. Ice formation in aircraft engines, on airfoil surfaces or propeller or rotor blades can be particularly hazardous. The formation of ice adds to the weight of the aircraft and creates imbalances, can block or change air intake paths and/or prevent movement of moving parts. Ice formation, therefore, needs to be reliably and quickly detected.

Most commercial aircraft are fitted with heaters or other de-icing systems to remove or reduce ice formation during flight. In addition, or alternatively, an alarm may be activated if ice formation is determined. Also, aircraft are de-iced before take-off in conditions where ice may have formed on surfaces of the aircraft. In detecting ice formation, temperature measurements are taken or signals indicative of temperature or temperature change are generated, and de-icing is performed if temperatures below a given threshold are determined.

Conventional ice detection systems comprise an array of temperature sensors arranged on or in connection with the surface to be monitored. The sensors are each connected by respective wires to a control unit. Each sensor sends a signal indicative of a temperature at the location of the sensor, to the control unit along the wire(s). The signal may be, e.g., an electrical signal such as voltage or current. The signals are then processed at the control unit to provide indications of ice formation or imminent ice formation, to trigger an alarm and/or de-icing/heating. The temperature sensors are temperature sensitive elements, of which various types are known in the art. The number of wires between the sensor array and the control unit depends on the number of temperature sensitive elements. A commonly used sensor is a three wire RTD and in such arrangements, each sensor element is connected to the control unit via three wires. Power lines are also provided to the sensor assembly. Such systems, therefore, involve a large number of wires to and from the sensors, which increases threefold for each additional sensor.

The use of a large number of wires adds to the weight and complexity of the system and provides a high number of potential failure points. Each additional wire makes the system less mechanically reliable.

The present disclosure provides a system and method for ice detection using fewer wires than conventional systems.

### SUMMARY

Accordingly, there is provided an ice detection system for an aircraft surface, comprising a sensor assembly comprising a plurality of temperature sensitive elements configured to be arranged at respective points on the aircraft surface, a control unit arranged to receive signals indicative of a temperature sensed by each of the temperature sensitive elements, a signal conducting bus to transmit the signals from the temperature sensitive elements to the control unit, and means for providing power to the sensor assembly, wherein the sensor assembly further comprises a multiplexer arranged to multiplex the signals from the plurality of temperature sensitive elements into a single signal for transmission on the signal conducting bus to the control unit.

Different types of multiplexing may be used as is known in the art.

The temperature sensitive elements may be any known temperature sensor for example a resistive temperature detector (RTD) e.g. a three wire RTD.

In an example, the means for providing power to the sensor assembly provides power to the multiplexer via a step down voltage regulator e.g. a Zener voltage regulator, a linear voltage regulator, a power switching voltage regulator, etc.. Other power supplies may also be used.

The control unit preferably evaluates the signals e.g. by comparing the signals to a threshold, and controls a heater and/or a de-icing device and/or an alarm depending on the result of the comparison. The signals can be evaluated in other ways e.g., but not limited to, using detection and/or discrimination algorithms to identify different icing application conditions. Again, depending on evaluation, estimation or determination of a particular condition, action may be triggered e.g. activating a heater, de-icer, alarm, etc.

Also provided is a method of operating an ice detection system comprising detecting temperatures at a plurality of locations on an aircraft surface, combining the detected temperatures into a single multiplexed signal for transmission to a control unit, comparing the temperatures with a threshold, identifying temperatures indicative of ice formation based on the comparison and identifying the location at which such temperatures were detected.

The method may then be further used to operate a heater or de-icing device at the identified location(s).

Preferred embodiments of the invention will now be described by way of example only, with reference to the drawings.

### BRIEF DESCRIPTION OF THE DRAWINGS

Fig. 1 is a schematic view of an ice detection system as known in the prior art.
Fig. 1A is a more detailed view of a known ice detection system.
Fig. 2 is a schematic view of an ice detection system according to this disclosure.
Fig. 2A is a more detailed view of an ice detection system according to this disclosure.
Fig. 2B is a more detailed view of an alternative ice detection system according to this disclosure
Fig. 3 is a circuit diagram of a voltage regulator that could be used in a system according to the disclosure.
Fig. 4 is a block diagram for the signal conditioning of an acquired temperature signal.

### DETAILED DESCRIPTION

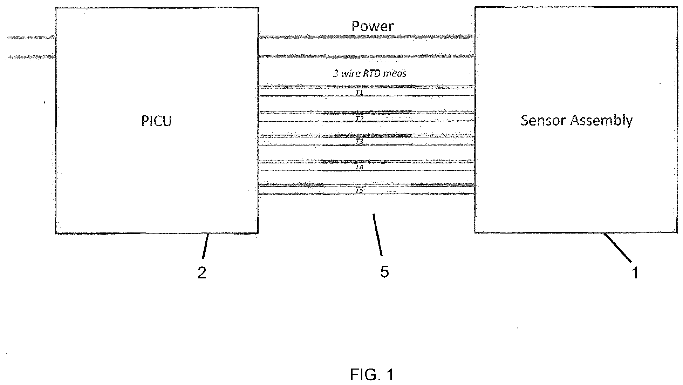

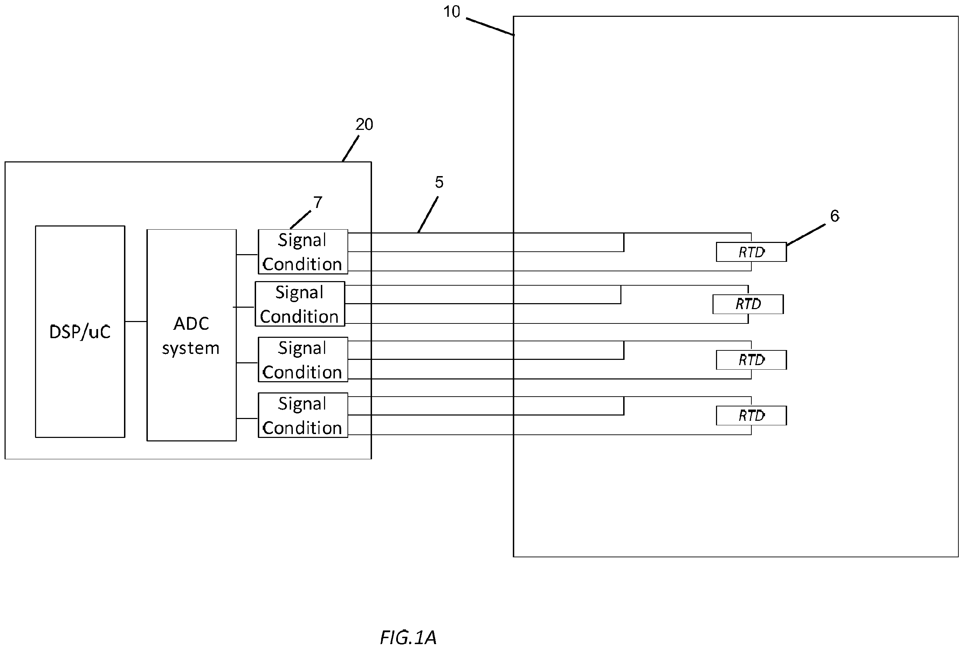

A known ice detection system will be briefly described with reference to Fig. 1 and Fig. 1A The system comprises a sensor assembly 1 connected to a control unit 2. The sensor assembly comprises a plurality of temperature sensitive elements 6 to be placed at various locations on an aircraft surface e.g. airfoil, blade, engine, etc. (not shown) to measure temperature at or near such locations. Power is provided to the sensor assembly via a power bus 3, and may be provided from or via the control unit 2. Alternatively, the sensor assembly may be powered by a different source.

Each of the temperature sensing elements 6 outputs a signal indicative of the temperature sensed by that sensing element. Each signal is transmitted via one or more wires 5 to the control unit. In the example shown, the sensors are resistive temperature detectors (RTDs) whose resistance increases as temperature increases. In an example, so-called three-wire RTDs are used to minimise the effects of the lead resistance. Thus, three signal wires are provided for each temperature sensitive element. Of course, other temperature sensors could be used.

The control unit evaluates, using multiple signal conditioners 7, the detected temperatures e.g. by comparison with a predetermined threshold and/or by performing a detection and discrimination algorithm, to determine an icing condition, or a condition indicative of imminent or likely ice formation. The result of the evaluation may be used to activate a heater (not shown) and/or other de-icing devices (not shown) and/or to trigger an alarm (not shown).

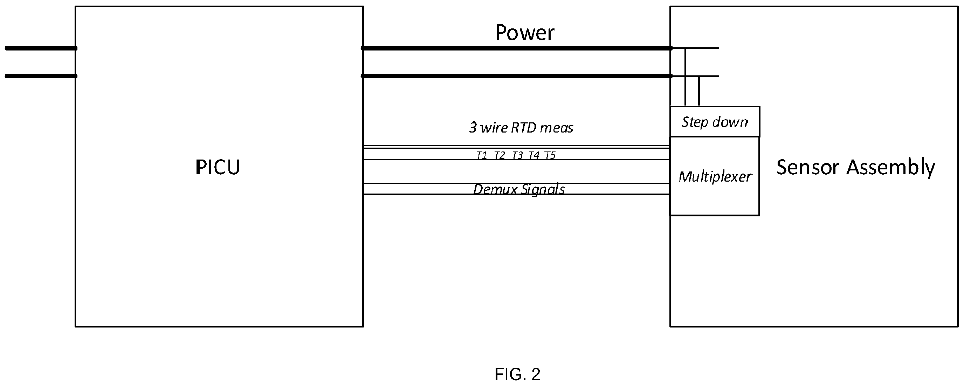

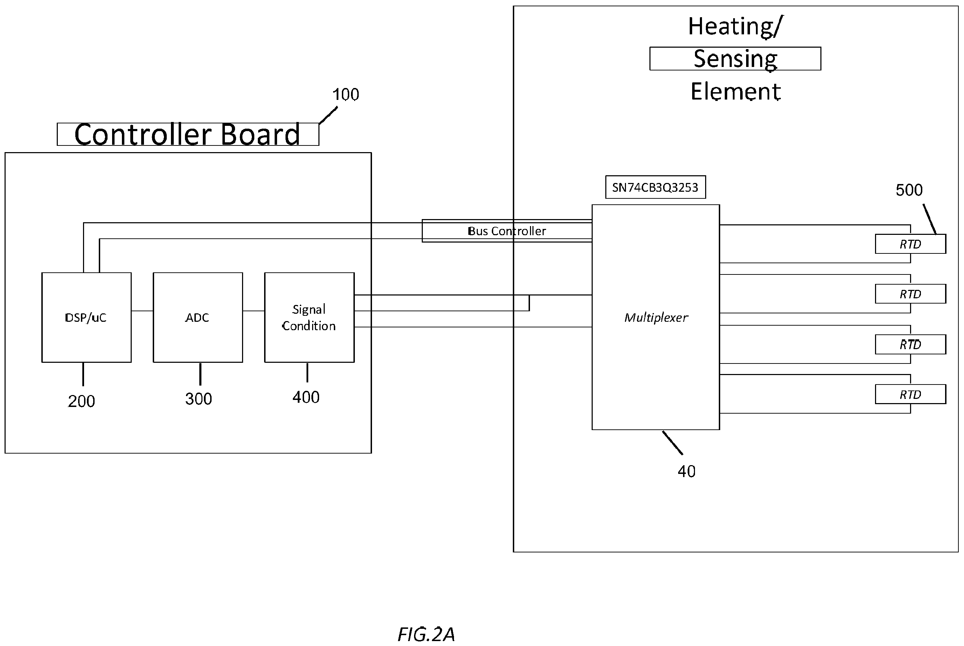

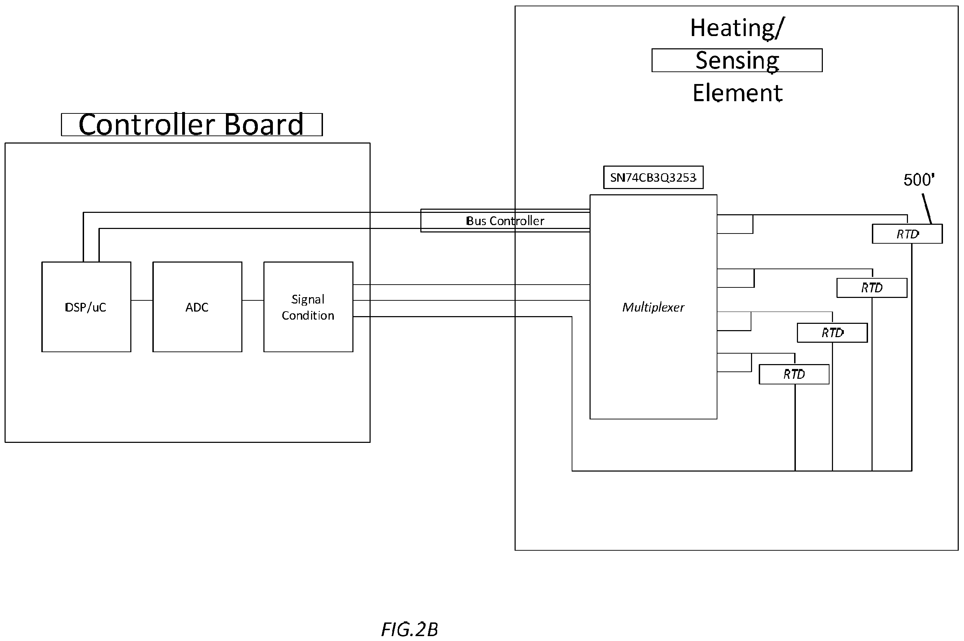

Referring now to Fig. 2, the system of the present disclosure solves problems of systems such as shown in Fig. 1, by avoiding the need for a large number of wires 5 from the sensor assembly to the control unit, thus resulting in a more reliable system.

As with conventional systems, the system of the disclosure includes a sensor assembly 10 comprising a plurality of temperature sensitive elements (not shown) and a control unit 20. Power is supplied to the sensor assembly 10 via a power bus 30.

The sensor assembly 10 is provided with a multiplexer 40 which receives the output signals from each of the temperature sensitive elements and multiplexes them all onto a single output signal for transmission of a single bus 50 to the control unit 20. As with the known arrangements, many types of temperature sensor could be used. In an example, three wire RTDs are used. Input signals (demux signals) are provided to the multiplexer to be transmitted with the temperature signals on the bus 50 to identify which temperature measurement is from which temperature sensitive element. In an example, the multiplexer may be a single chip device.

Figs. 2A and 2B show, in more detail, possible embodiments of a system such as described above in relation to Fig. 2. In the examples shown, the control unit 10 is provided on a controller board 100 and includes a processor - here, a digital signal processor, DSP 200, an analog to digital converter, ADC 300, and signal conditioning circuitry 400.

As described above, the sensor assembly 10 includes a multiplexer 40 and a plurality of sensors. The sensors can have different arrangements. In one example, shown in Fig. 2A, the sensors may be three wire RTDs 500 connected to the multiplexer 40 such that both ends of the RTD are connected through the multiplexer to the controller board. In the arrangement of Fig. 2B, the RTDs 500', are connected through the multiplexer to the controller board via a three wire system.

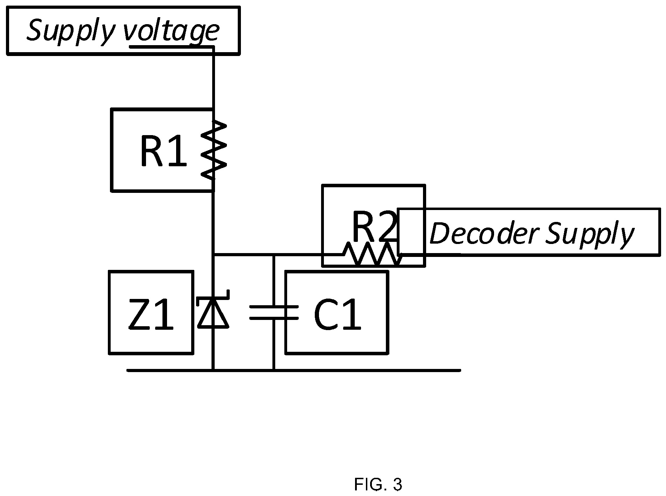

In a preferred embodiment, the power transmitted to the sensor assembly 10 on bus 30 may also be used to power the multiplexer. In the example shown, a step down regulator 60 reduces the power to an appropriate level to supply the multiplexer. The step down regulator may, for example, be a Zener voltage regulator as shown in Fig. 3. Of course, other power supplies and/or regulators may be used to provide an appropriate power supply for the multiplexer 40.

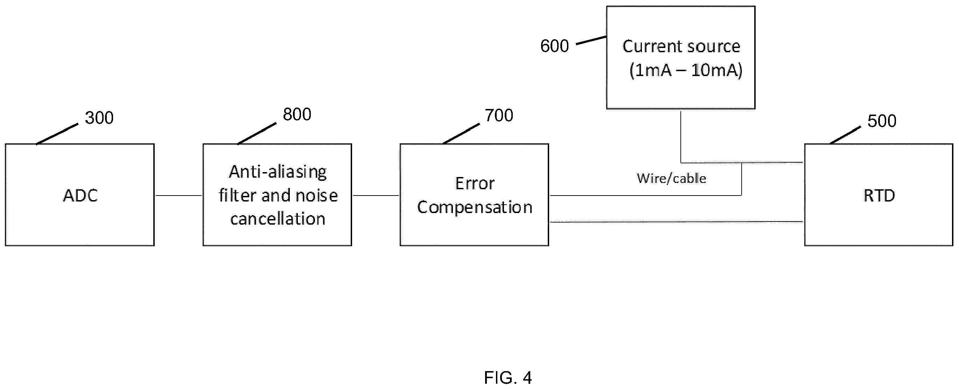

Referring now to Fig. 4, the temperature signals may be conditioned as follows.

A current source 600 generates a current signal, e.g. 1mA to 10mA, and feeds this into the sensing element - here, RTD 500, to generate a voltage signal in correlation with the temperature sensed by the RTD. This is then sent to the control unit (via the multiplexer 40) to the signal conditioner. The signal conditioner includes error compensation 700 and anti-aliasing and noise cancellation 800. After conditioning, the signal is passed to the ADC 300.

The error compensation block 700 compensates for the error in the measurement due to the wire/cable resistance from the RTD.

The anti-aliasing filter and noise cancellation block 800 will eliminate the higher order harmonics to maintain the signal integrity required for the application.

The system of this disclosure considerably reduces the amount of wiring in an ice detection system, thus reducing the mechanical failure rate of the system. Furthermore, the control unit only needs to process data from a single input bus which reduces the components needed for signal conditioning and acquisition.

The described embodiments are by way of example only. The scope of this disclosure is limited only by the claims.

## Claims

1. An ice detection system for an aircraft surface, comprising a sensor assembly (10) comprising a plurality of temperature sensitive elements (500) configured to be arranged at respective points on the aircraft surface, a control unit (20) arranged to receive signals indicative of a temperature sensed by each of the temperature sensitive elements, a signal conducting bus (50) to transmit the signals from the temperature sensitive elements to the control unit, and means for providing power to the sensor assembly, wherein the sensor assembly further comprises a multiplexer (40) arranged to multiplex the signals from the plurality of temperature sensitive elements into a single signal for transmission on the signal conducting bus to the control unit.

2. The system of claim 1, wherein the temperature sensitive elements are resistive temperature detectors.

3. The system of claim 2, wherein the temperature sensitive elements are three-wire resistive temperature detectors.

4. The system of any preceding claim, wherein the signals are voltage signals.

5. The system of any of claims 1 to 3, wherein the signals are current signals.

6. The system of any preceding claim, wherein the means for providing power to the sensor assembly provides power to the multiplexer via a step down regulator (60).

7. The system of claim 6, wherein the step down regulator is a Zener voltage regulator, a linear voltage regulator or a power switching voltage regulator.

8. The system of any preceding claim, wherein the received signals are evaluated to control a heating device.

9. The system of any preceding claim, wherein the received signals are evaluated to control a de-icing device.

10. The system of any preceding claim, wherein an alarm is triggered based on the signals.

11. The system of any preceding claim wherein the signals are evaluated by means of a comparison with a predetermined threshold.

12. The system of any preceding claim wherein the signals are evaluated by means of a detection and discrimination algorithm.

13. A method of operating an ice detection system comprising detecting temperatures at a plurality of locations on an aircraft surface, combining the detected temperatures into a single multiplexed signal for transmission to a control unit, evaluating the temperatures at the control unit, identifying temperatures indicative of ice formation based on the comparison and identifying the location at which such temperatures were detected.

14. The method of claim 13, further comprising operating a heater or de-icing device at the identified location(s) based on the detected temperatures.

15. The method of claim 13 or 14, further comprising triggering an alarm based on the identified temperatures.
